# EUROPEAN PATENT APPLICATION

(11) **EP 2 426 624 A1**
(43) Date of publication of application: **07.03.2012**
(21) Application number: 10194925.3
(22) Date of filing: 14.12.2010
(51) Int. Cl.: G06K 19/07

(54) **A USB device structure**

(30) Priority: 03.09.2010 TW 099129874
(71) Applicant: Walton Advanced Engineering Inc., Kaohsiung City 806 (TW)
(72) Inventor: Yu, Hong-Chi, 806, Kaohsiung City (TW); Chang, Mao-Ting, 806, Kaohsiung City (TW)
(74) Representative: Viering, Jentschura & Partner

(57) **Abstract**

A USB device structure comprises a first package component and a second package component at least wherein the second package component is installed on the first package component; in addition, the first package component comprises an electronic device at least which is attached on a substrate; the second package component comprises an electronic device at least which is attached on a substrate; the first package component is electrically connected to the second package component for promoted product yield rate, customer's early delivery date, and reduced manufacturing and material costs.

## Description

### BACKGROUND OF THE INVENTION

### 1) FIELD OF THE INVENTION

The present invention relates to a USB device structure, especially to a USB device structure with chips, which have different functions or distinct properties, separately manufactured to various package components.

### 2) DESCRIPTION OF THE PRIOR ART

The Internet era has facilitated information sharing accelerated as well as popularization and progress of information technology. In this regard, a variety of products such as computers and communications & consumer electronics have extensively permeated into consumers' lives.

Among these electronic products, the storage devices such as flash disks, hard disks and other devices containing flash memories mostly which are characteristic of lightness, thinness, shortness, smallness, high mobility, and storage capacity multiplied to the T-byte level and continuously increased are increasingly popular with consumers who concern the purpose of information sharing.

It has become an inevitable tendency that a storage device is provided with chip components which contain different functions or distinct properties and are electrically connected each other via a substrate or a multi-layered substrate accommodating these chips.

However, one functional chip component's poor electrical contact during a manufacturing process such as a drawback of wire-sweeping or exposed bonding wire due to densely distributed boning wires easily causes a whole product's irregular electrical characteristics and thus one product failed in an inspection/acceptance stage.

From a viewpoint of manufacturing products, a high product defect rate might delay a customer's delivery date, increase the time interval of manufacture, supplant another producing line for fabrication of other products, and cause a high manufacturing cost possibly. In addition, a packaged product's regular electronic devices not independently removed for extra processing and application result in wastes of materials and increased material costs comparatively.

### SUMMARY OF THE INVENTION

To solve the said problems, the present invention is intended for providing a USB device structure comprising both a first package component, which accommodates an electronic device at least attached on a substrate and encased in a first package body, and a second package component at least, which accommodates an electronic device at least attached on a substrate and encased in a second package body, wherein the first package body is encased in the second package component. An inner surface of the first package component's substrate and an outer surface of the second package component's substrate are provided with a plurality of metal contacts respectively wherein the metal contacts on the first package component and the metal contacts on the second package component electrically contact each other. As one complete package device, the second package component can be tested electrically first to ensure the second package component's regular electrical characteristics and electrically connected to the first package component later by a manufacturer.

Thus, the present invention is intended for independently encasing two types of chip components with different functions or distinct properties at least to ensure regular electrical characteristics of an encased package component (such as the second package component of the present invention) prior to electrical connection to another package component (such as the first package component of the present invention) for promoted yield rate of products, customer's early delivery date, and reduced manufacturing and material costs.

To achieve the said purposes, the principal technical schemes used in the present invention are based on the following technical program.

The present invention is one USB device structure comprising both a first package component, which accommodates an electronic device at least attached on a substrate and encased in a first package body, and a second package component at least, which accommodates an electronic device at least attached on a substrate and encased in a second package body, wherein the first package body is encased in the second package component and the second package body is completely or partially encased in the first package body; an inner surface on the substrate of the first package component is provided with a plurality of metal contacts; an outer surface on the substrate of the second package component is provided with a plurality of metal contacts wherein the metal contacts of the first package component and the metal contacts of the second package component electrically contact each other.

The purposes of the present invention and solutions for its technical problems are further embodied with the following techniques.

In the said USB device structure, the electronic devices of the first package component are installed on the inner surface or an outer surface of the substrate or on both inner and outer surfaces simultaneously.

In the said USB device structure, the electronic device of the first package component is a control device or a passive device at least.

In the said USB device structure, the outer surface on the substrate of the first package component is provided with a plurality of metal contacts and the metal contacts are compatible to one of the following data transfer interfaces at least such as Universal Serial Bus (USB), Mini Universal Serial Bus (Mini USB), Micro Universal Serial Bus (Micro USB), or External Serial Advanced Technology Attachment (e-SATA).

In the said USB device structure, the electronic devices of the second package component are installed on an inner surface or the outer surface of the substrate or on both inner and outer surfaces simultaneously.

In the said USB device structure, the electronic device of the second package component is a control device or a memory chip at least.

In the said USB device structure, the first package body is formed with molding or glob.

In the said USB device structure, the second package body is formed with molding or glob.

In the said USB device structure, the first package body's ingredients comprise Epoxy, Hardener, Catalyst, Flame retardant and Filler.

In the said USB device structure, the Epoxy can be manufactured in Bisphenol-A, Novolac epoxy, Cyclicaliphatic or epoxidized polybutadiene.

In contrast to other devices manufactured in prior arts, the present invention is effective in independently encasing two chip devices with different functions or distinct properties at least to ensure regular electrical characteristics of an encased package component (such as the second package component of the present invention) prior to electrical connection to another package component (such as the first package component of the present invention) for effects such as promoted product yield rate, customer's early delivery date, and reduced manufacturing and material costs.

### BRIEF DESCRIPTIONS OF THE DRAWINGS

FIG. 1 is the perspective view for the first and the second embodiments in the present invention of a USB device structure.
FIG. 2 is the sectional view of the first embodiment for the present invention of a USB device structure.
FIG. 3 is the sectional view of the second embodiment for the present invention of a USB device structure.
FIG. 4 is the sectional view of the third embodiment for the present invention of a USB device structure.
FIG. 5 is the sectional view of the fourth embodiment for the present invention of a USB device structure.

### DETAILED DESCRIPTIONS OF THE PREFERRED EMBODIMENTS

For purposes, characteristics, and effects obviously and easily understood, the preferred embodiments of the present invention are particularly interpreted as follows:

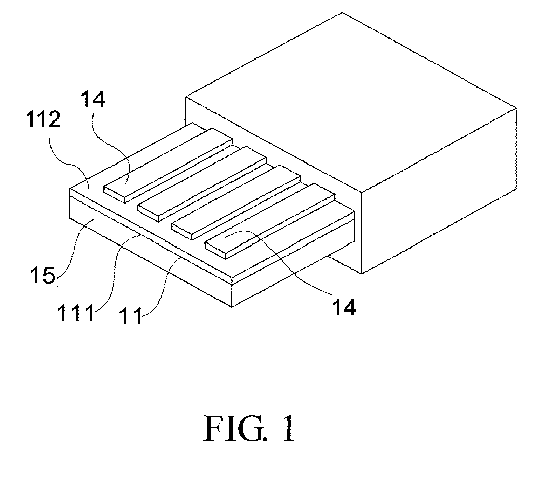

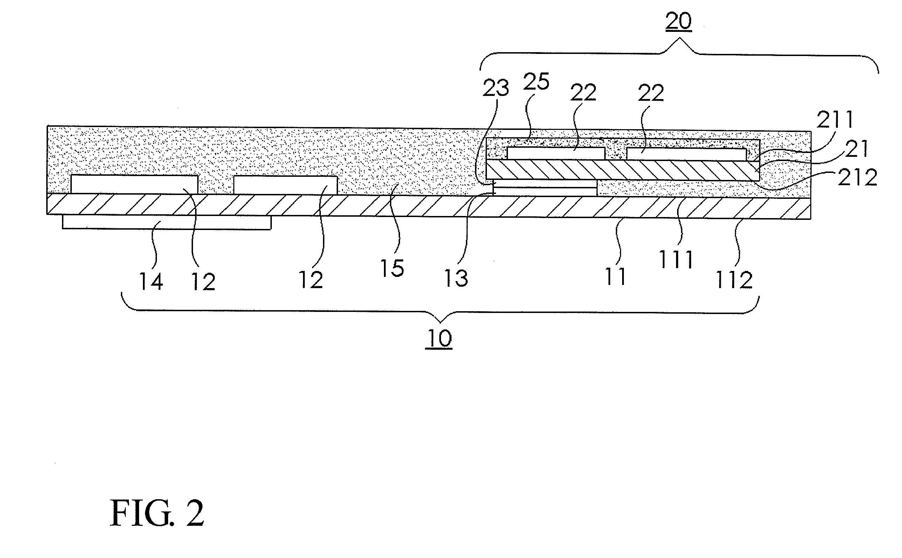

Referring to FIGS. 1 and 2 that demonstrate the first embodiment of the present invention of a USB device structure comprising a first package component (10) and a second package component (20) at least which are interpreted based on a first package component (10) and a second package component (20) for this embodiment. The first package component (10) could be a Chip-On-Board (COB) package and comprises an electronic device (12) at least attached on a substrate (11) which accommodates an inner surface (111) and an outer surface (112) substantially wherein the electronic device (12) is installed on the inner surface (111) of the substrate (11), electrically connected to the substrate (11) via a wire bonding, a flip chip or a surface mounting technique (not shown in figures), and regarded as a control device or a passive device at least preferably.

The second package component (20) is installed on the first package component (10) and the inner surface (111) on the substrate (11) of the first package component (10) is provided with a plurality of metal contacts (13) used to electrically contact the second package component (20).

In addition, the outer surface (112) on the substrate (11) of the first package component (10) is also provided with a plurality of metal contacts (14) compatible to one of the following data transfer interfaces at least such as Universal Serial Bus (USB), Mini Universal Serial Bus (Mini USB), Micro Universal Serial Bus (Micro USB), or External Serial Advanced Technology Attachment (e-SATA) wherein the metal contacts (14) compatible to a Universal Serial Bus (USB) connecter is interpreted in this embodiment. Furthermore, the substrate (11) is usually a high-density double-sided multi-layer printed circuit board with circuits (not shown in figures) developed inside as an interface for transmit of electricity and the metal contacts (14) electrically connected to the electronic device (12) via the substrate (11). The present invention could be electrically connected to a computer via a data transfer interface developed with the metal contacts (14).

The second package component (20) comprises an electronic device (22) at least attached on a substrate (21) comprising an inner surface (211) and an outer surface (212) substantially wherein the electronic device (22) is installed on an inner surface (211) of the substrate (21), electrically connected to the substrate (11) via a wire bonding or a flip chip technique (not shown in figures), and regarded as a control device or a memory chip at least preferably. Additionally, the outer surface (212) of the substrate (21) is provided with a plurality of metal contacts (23) used to electrically contact the first package component (10). In fact, the substrate (21) is usually a high-density double-sided multi-layer printed circuit board with circuits (not shown in figures) developed inside as an interface for transmit of electricity and the metal contacts (23) electrically connected to the electronic device (22) via the substrate (21). Preferably, the electronic device (22) of the second package component (20) could be encased with a second package body (25) to ensure stable reliability of the activated electronic device (22).

In the further discussions about purposes of the present invention, two types of chip components with different functions or distinct properties are independently encased for increased products yield rate, customer's early delivery date, and reduced manufacturing and material costs. Accordingly, a plurality of metal contacts (23) of the outer surface (212) on the substrate (21) of the second package component (20) electrically contact a plurality of metal contacts (13) of the inner surface (111) on the substrate (11) of the first package component (10) after the electrical characteristics of the second package component (20) are ensured in this embodiment. Preferably, a first package body (15) developed on the inner surface (111) of the substrate (11) of the first package component (10) is used to encase both the electronic device (12) of the first package component (10) and the second package component (20) wherein the second package body (25) is totally or partially encased in the first package body (15) to form a complete integrated circuit module. In this embodiment, both the first package body (15) and the second package body (25) formed with molding have their principal ingredients including but being not limited to Epoxy, Hardener, Catalyst, Flame retardant and Filler wherein Epoxy could be selected from but not limited to Bisphenol-A, Novolac epoxy, Cyclicaliphatic or epoxidized polybutadiene; both the first package body (15) and the second package body (25) formed with glob also have their principal ingredients including but being not limited to Epoxy and Catalyst.

When a plurality of metal contacts (14) of the outer surface (112) on the substrate (11) of the first package component (10) are plugged and connected to a computer, some actions associated with digital contents such as transmit, reception, addition, deletion, and modification can be conducted between the present invention and the computer.

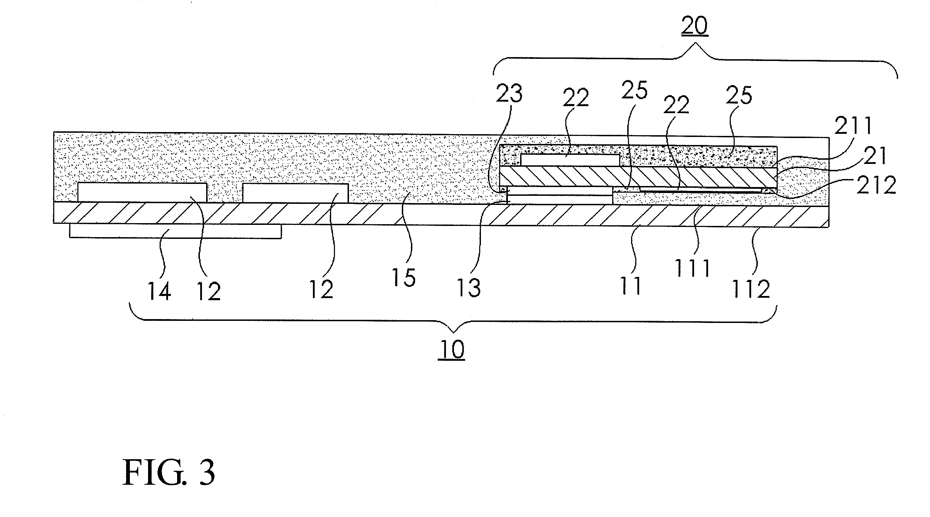

FIGS. 1 and 3 demonstrate the second embodiment of the present invention, and FIG. 1 is representative of the perspective views of the first and the second embodiments because FIG. 1 is not only the perspective view of the present invention but also the figure used to describe the perspective views of the first and the second embodiments.

In this regard, the symbols marked for a USB device structure described in the first embodiment and FIGS. 1 and 2 are identically illustrated in FIGS. 1 and 3 and not repeatedly explained. Next, referring to FIGS. 1 and 3 which demonstrate the difference between the second embodiment and the first embodiment is the electronic devices (22) of the second package component (20) are installed on both the inner surface (211) and the outer surface (212) of the substrate (21). In addition, the electronic devices (22) are installed on either the inner surface (211) (first embodiment) or the outer surface (212) (not shown in figures) of the substrate (21) only.

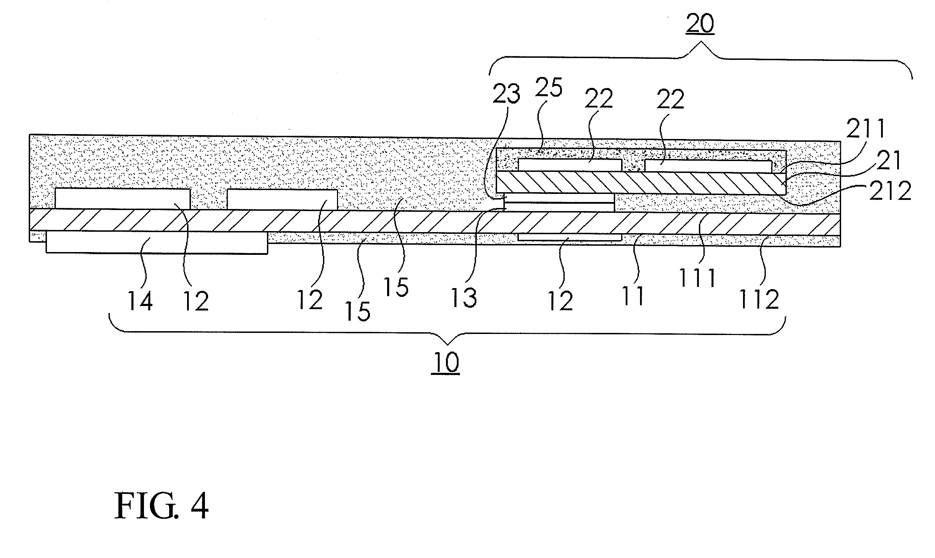

FIGS. 1 and 4 demonstrate the third embodiment of the present invention, and FIG. 1 is representative of the perspective views of the first, the second, and the third embodiments because FIG. 1 is not only the perspective view of the present invention but also the figure used to describe the perspective views of the first, the second, and the third embodiments.

In this regard, the symbols marked for a USB device structure described in the first embodiment and FIGS. 1 and 2 are identically illustrated in FIGS. 1 and 4 and not repeatedly explained. Next, referring to FIGS. 1 and 4 which demonstrate the difference between the third embodiment and the first embodiment is the electronic devices (12) of the first package component (10) are installed on both the inner surface (111) and the outer surface (112) of the substrate (11). Additionally, the electronic devices (12) are installed on either the inner surface (111) (first embodiment) or the outer surface (112) (not shown in figures) of the substrate (11) only.

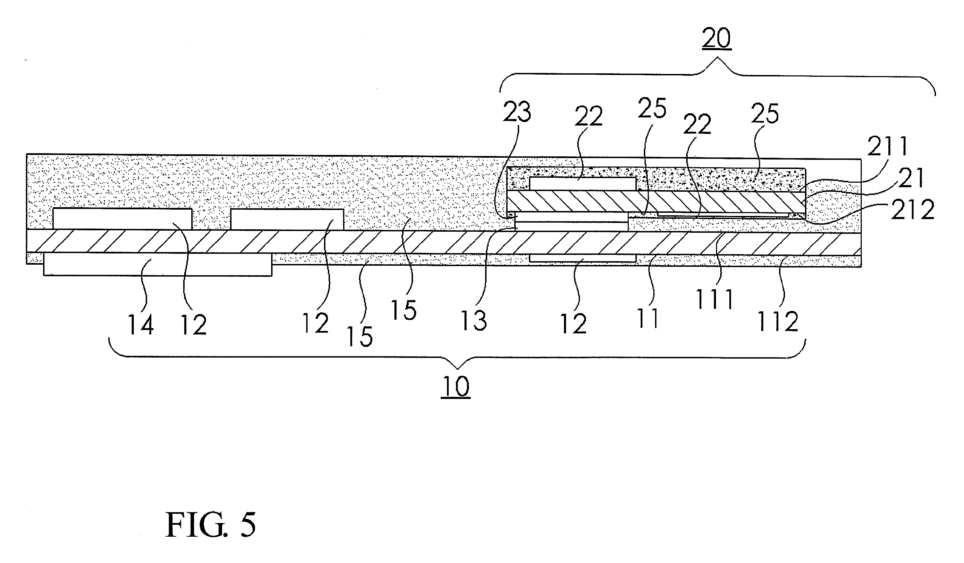

FIGS. 1 and 5 demonstrate the fourth embodiment of the present invention, and FIG. 1 is also representative of the perspective views of the first, the second, the third, and the fourth embodiments because FIG. 1 is not only the perspective view of the present invention but also the figure used to describe the perspective views of the first, the second, the third, and the fourth embodiments.

In this regard, the symbols marked for a USB device structure described in the second embodiment and FIGS. 1 and 3 are identically illustrated in FIGS. 1 and 5 and not repeatedly explained. Next, referring to FIGS. 1 and 5 which demonstrate the difference between the fourth embodiment and the second embodiment is the electronic devices (12) of the first package component (10) are installed on both the inner surface (111) and the outer surface (112) of the substrate (11). Additionally, the electronic devices (12) are also installed on either the inner surface (111) (first embodiment) or the outer surface (112) (not shown in figures) of the substrate (11) only.

From the first embodiment to the fourth embodiment associated with the present invention, the electronic devices (12) of the first package component (10) located on the inner surface (111) or the outer surface (112) of the substrate (11) or on both inner and outer surfaces simultaneously and the electronic devices (22) of the second package component (20) located on the inner surface (211) or the outer surface (212) of the substrate (21) or on both inner and outer surfaces simultaneously are planned in consideration of both configurations of circuits and a complete structure in the primary design of the product. Accordingly, the claims of the present invention should not be restricted by positions of electronic devices of the first package component or the second package component.

With the said descriptions summarized, the present invention comprising two independently packaged chip components at least with different functions or distinct properties and ensuring regular electrical characteristics of a package component (the second package component of the present invention) prior to electrical connection to another package component (the first package component of the present invention) is effective in promoted product yield rate, customer's early delivery date, and reduced manufacturing and material costs. Therefore, the present invention that is different from general conventional USB device structures but regarded as creative work among similar test methods meets patentability and is applied for the patent.

The foregoing disclosures and descriptions from the first embodiment to the fourth embodiment of the present invention are not used in restricting the present invention but illustrative and explanatory of preferred embodiments only, and therefore any change and modification corresponding to the said embodiments and made by anyone skilled in the art within instructions, claims, or drawings of the present invention do not depart from the present invention's technical scope which is referred to the claims defined as follows.

## Claims

1. A USB device structure comprising:
A first package component (10) accommodating an electronic device (12) at least which is attached on a substrate (11) and encased in a first package body (15);
A second package component (20) at least wherein the second package component (20) accommodates an electronic device (22) at least which is attached on a substrate (21) and encased in a second package body (25); the first package body (15) is encased in the second package component (20) and the second package body (25) is totally or partially encased in the first package body (15); an inner surface (111) on the substrate (11) of the first package component (10) is provided with a plurality of metal contacts (13); an outer surface (212) on the substrate (21) of the second package component (20) is provided with a plurality of metal contacts (23) wherein the metal contacts (13) of the first package component (10) are electrically connected to the metal contacts (23) of the second package component (20).

2. The USB device structure according to Claim 1 wherein the electronic devices (12) of the first package component (10) are installed on the inner surface (111) or an outer surface (112) of the substrate (11) or on both inner and outer surfaces simultaneously.

3. The USB device structure according to Claim 1 wherein the electronic device (12) of the first package component (10) is a control device or a passive device at least.

4. The USB device structure according to Claim 2 wherein the outer surface (112) on the substrate (11) of the first package component (10) is provided with a plurality of metal contacts (14) compatible to one of the following data transfer interfaces at least such as Universal Serial Bus (USB), Mini Universal Serial Bus (Mini USB), Micro Universal Serial Bus (Micro USB), or External Serial Advanced Technology Attachment (e-SATA).

5. The USB device structure according to Claim 1 wherein the electronic devices (22) of the second package component (20) are installed on an inner surface (211) or the outer surface (212) of the substrate (21) or on both inner and outer surfaces simultaneously.

6. The USB device structure according to Claim 1 wherein the electronic device (22) of the second package component (20) is a control device or a memory chip at least.

7. The USB device structure according to Claim 1 wherein the first package body (15) is formed with molding or glob.

8. The USB device structure according to Claim 1 wherein the second package body (25) is formed with molding or glob.

9. The USB device structure according to Claim 1 wherein the ingredients of the first package body (15) comprise Epoxy, Hardener, Catalyst, Flame retardant, and Filler.

10. The USB device structure according to Claim 9 wherein the Epoxy can be Bisphenol-A, Novolac epoxy, Cyclicaliphatic or epoxidized polybutadiene.
